# EUROPEAN PATENT APPLICATION

(11) **EP 3 771 185 A1**
(43) Date of publication of application: **27.01.2021**
(21) Application number: 20182854.8
(22) Date of filing: 29.06.2020
(51) Int. Cl.: H04L 29/12, H04L 12/24

(54) **VERIFICATION PROGRAM, VERIFICATION METHOD, AND VERIFICATION DEVICE**

(30) Priority: 25.07.2019 JP 2019136903
(71) Applicant: FUJITSU LIMITED, Kanagawa 211-8588 (JP)
(72) Inventor: Takano, Yosuke, Kanagawa, 211-8588 (JP); Oguchi, Naoki, Kanagawa, 211-8588 (JP); Higuchi, Junichi, Kanagawa, 211-8588 (JP)
(74) Representative: Hoffmann Eitle

(57) **Abstract**

A verification program that causes a computer to execute a process includes: when performing a network address translation, creating a forwarding graph that represents a network connection from a source network to a destination network based on extended IP address information in which an extended IP address including IP addresses before and after the network address translation, a belonging domain before the network address translation, and a belonging domain after the network address translation are associated with each other; and verifying reachability from the source network to the destination network based on the created forwarding graph.

## Description

### FIELD

The embodiments discussed herein are related to a verification program, a verification method, and a verification device.

### BACKGROUND

In recent years, large-scale network failures caused by the setting mistakes of network devices have become a major issue. Here, the large-scale network is, for example, a network used by a number of users equivalent to, for example, one million units. Once a large-scale network failure occurs, it takes time to identify the device and settings that has caused the failure, during which time it may be difficult for a user to use the network, and the amount of loss that occurs in, for example, a data center may be enormous. Therefore, there is a need for a technology in which the settings of network devices are monitored and acquired in real time and communication consistency is confirmed so that the network is not stopped due to an erroneous setting.

A network verification technology is a technology in which the settings of each network device are collected and the reachability of the network is checked from end to end. In the network verification technology, a verification device creates a forwarding graph logically representing the connectivity of each network based on the FIB (Forwarding Information Base), which is the route setting information collected from network devices such as routers and switches arranged on the network. The network represented by the forwarding graph is expressed as an adjacency matrix, and it is possible to check the reachability of packets and the presence/absence of a loop by calculating the matrix, thereby implementing a network consistency verification.

In the related art regarding a network failure, there is a technology that enables a failure recovery in a GMPLS (Generalized Multi-Protocol Label Switching Architecture) network regardless of a one-way link failure, a two-way link failure, or a node failure. In this technology, a network device determines whether it is possible to detour all the failed links detected in a communication line by switching the communication line by itself. When the network device determines that all the failed links may be detoured, the network device detects the switching state of a downstream segment that may bypass all the failed links, and does not switch the route of the communication line when the communication line has been switched or is about to be switched in the downstream segment. Meanwhile, in the downstream segment, when the communication line has not been switched or is not about to be switched, the network device switches to the detour path.

In addition, as a technology of the related art, there is a network controller that may readily achieve the quality assurance of a network service and the optimization of the throughput of the entire system. The network controller controls a network having a multi-layer configuration, monitors whether a network service in a first layer satisfies a required service level, and changes the settings of a packet header to change the resources in the first layer according to a monitoring result. Then, the resources of a second layer lower than the first layer change according to the settings change of the packet header.

Further, as a technology of the related art, there is a network address translation method of rapidly relaying a data packet between a client and a server in a client-server environment in which a plurality of servers shares the same type of work. In this network address translation method, the same IP address is assigned to all server computers connected to a plurality of server connection ports for distribution processing. Then, an address translation device having an IP address translation mechanism and an address translation database omits a reconfiguration process of the data packet at the time of communication between the client and the server, and performs an inter-network address translation process, which is limited only at the time of the communication between the servers.

Related techniques are disclosed in, for example, U.S. Patent No. 10057166, Japanese Laid-Open Patent Publication No. 2008-53938. International Publication Pamphlet No. WO 2016/152083, and Japanese Laid-Open Patent Publication No. 2000-261485.

Since the NAT (Network Address Translation) exists in an actual network, and, for communication between networks belonging to different domains, an IP (Internet Protocol) address (either a source or a destination) described in a packet header may be translated. Since domains are different at the boundary of the network device having the NAT function, when a forwarding graph is created by the network verification technology, an independent graph is generated for each domain.

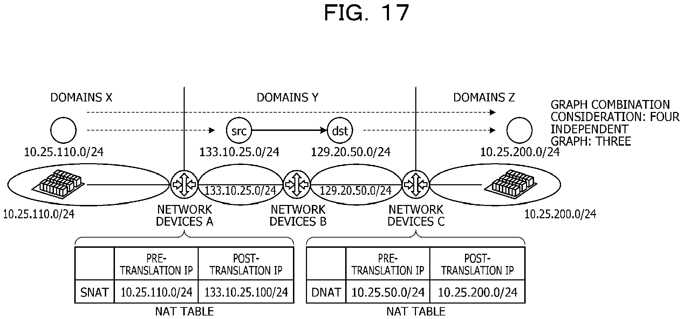

FIG. 17 is a view illustrating an example of a forwarding graph created by the network verification technology. In FIG. 17, an end-to-end communication is performed from a device having the IP address "10.25.110.0/24" to a device having the IP address "10.25.200.0/24". A network device A and a network device C have a NAT table, SNAT (Source NAT) is performed in the network device A, and DNAT (Destination NAT) is performed in the network device C.

As illustrated in FIG. 17, there are a domain X and a domain Y at the boundary of the network device A, and the domain Y and a domain Z at the boundary of the network device C. For this reason, the forwarding graph created by the network verification technology becomes three independent graphs for each domain, and is represented by three adjacency matrices. Two or more forwarding graphs in different domains may not be processed by a single matrix operation.

When checking the reachability of packets between different domains end-to-end in a network in which an IP address translation is performed by the NAT function, a consistency verification is performed first on each of a plurality of forwarding graphs generated by the number of address translations. Then, the relationship proof and the consistency verification between the graphs matching the NAT translation settings are performed for the number of graph combinations.

In FIG. 17, the consistency verification is performed on each of the three forwarding graphs, and the relationship proof and the consistency verification are performed on three combinations of two-domain forwarding graphs and one combination of three-domain forwarding graphs. As described above, in the related art, the network consistency verification is performed on a total of seven types of forwarding graphs, and the relationship proof is performed on four types of forwarding graphs. As the number of network devices having the NAT function increases, the number of forwarding graphs and the number of combinations of forwarding graphs increase, which makes the network consistency verification more difficult.

In one aspect, an object of the present disclosure is to facilitate a network consistency verification in a network in which an IP address translation is performed by a NAT function.

### SUMMARY

According to an aspect of the present embodiments, a verification program that causes a computer to execute a process includes: when performing a network address translation, creating a forwarding graph that represents a network connection from a source network to a destination network based on extended IP address information in which an extended IP address including IP addresses before and after the network address translation, a belonging domain before the network address translation, and a belonging domain after the network address translation are associated with each other; and verifying reachability from the source network to the destination network based on the created forwarding graph.

In one aspect, the present disclosure may facilitate a network consistency verification in a network in which an IP address translation is performed by a NAT function.

### BRIEF DESCRIPTION OF DRAWINGS

FIG. 1 is a view illustrating the functional configuration of a verification device according to a first embodiment.
FIG. 2 is a view illustrating an example of an FIB table database.
FIG. 3 is a view illustrating an example of a NAT table database.
FIG. 4 is a view illustrating an example of an extended IP address information table.
FIG. 5A is a first view for explaining a method of creating an extended IP address/extended subnet mask.
FIG. 5B is a second view for explaining a method of creating an extended IP address/extended subnet mask.
FIG. 6 is a view for explaining an adjacency matrix display of a forwarding graph.
FIGs. 7A and 7B are views for explaining a method of determining reachability, which is performed by a consistency check unit.
FIG. 8A is a first view illustrating an example of a determination on reachability.
FIG. 8B is a second view illustrating an example of a determination on reachability.
FIG. 8C is a third view illustrating an example of a determination on reachability.
FIG. 9 is a view illustrating a sequence of a consistency determination.
FIGs. 10A and 10B are flowcharts illustrating a flow of a process of creating extended IP address information.
FIG. 11 is a view illustrating an example of a forwarding graph generated by the verification device.
FIGs. 12A and 12B are views illustrating a sequence of a consistency determination according to a second embodiment.
FIGs. 13A and 13B are views illustrating a sequence of a consistency determination according to a third embodiment.
FIG. 14 is a view illustrating the functional configuration of a network device and a verification device according to a fourth embodiment.
FIG. 15 is a view illustrating a sequence of a consistency determination according to the fourth embodiment.
FIG. 16 is a view illustrating the hardware configuration of a computer that executes a verification program according to an embodiment.
FIG. 17 is a view illustrating an example of a forwarding graph created by a network verification technology.

### DESCRIPTION OF EMBODIMENTS

Hereinafter, embodiments of a verification program, a verification method, and a verification device disclosed in the present application will be described in detail with reference to the drawings. The embodiments do not limit the disclosed technology.

### [First Embodiment]

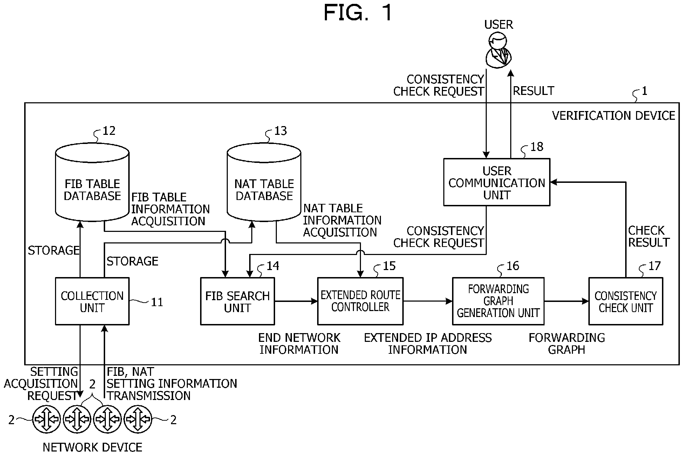

First, the functional configuration of a verification device according to a first embodiment will be described. FIG. 1 is a view illustrating the functional configuration of the verification device according to the first embodiment. As illustrated in FIG. 1, the verification device 1 according to the first embodiment includes a collection unit 11, a FIB table database 12, a NAT table database 13, a FIB search unit 14, an extended route controller 15, a forwarding graph generation unit 16, and a consistency check unit 17. The verification device 1 also includes a user communication unit 18.

The collection unit 11 transmits a setting acquisition request to each network device 2 to acquire FIB setting information and NAT setting information from each network device 2. Here, the FIB setting information is information registered in the FIB table, and the NAT setting information is information registered in a NAT table. The collection unit 11 stores the acquired FIB setting information in the FIB table database 12, and stores the acquired NAT setting information in the NAT table database 13.

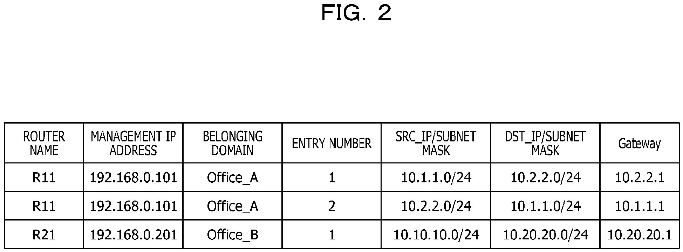

The FIB table database 12 stores the FIB setting information for a plurality of FIB tables. FIG. 2 is a view illustrating an example of the FIB table database 12. As illustrated in FIG. 2, the FIB table database 12 stores a router name, a management IP address, a belonging domain, an entry number, a Src_IP/subnet mask, a Dst_IP/subnet mask, and a gateway in association with each other.

The router name is a name for identifying a network device 2 that has transmitted the FIB setting information. The management IP address is an IP address of the network device 2 identified by the router name. The belonging domain is a name for identifying a domain to which the network device 2 identified by the router name belongs. The entry number is a number for identifying an entry for the network device 2 identified by the router name.

The Src_IP/subnet mask is a source IP address and a subnet mask of a packet to be relayed. The Dst_IP/subnet mask is a destination IP address and a subnet mask of the packet to be relayed. The gateway is an IP address of a transfer destination network device 2 of a packet whose Src_IP/subnet mask and Dst_IP/subnet mask match each other.

For example, the IP address of a network device 2 identified by "R11" is "192.168.0.101", and the network device 2 identified by "R11" belongs to a domain "Office_A". The corresponding entry number in the network device 2 identified by "R11" is "1". The source IP address and the subnet mask of the packet to be relayed are "10.1.1.0/24", and the destination IP address and the subnet mask of the packet to be relayed are "10.2.2.0/24". The IP address of the transfer destination network device 2 of a packet whose Src_IP/subnet mask and Dst_IP/subnet mask match each other is "10.2.2.1".

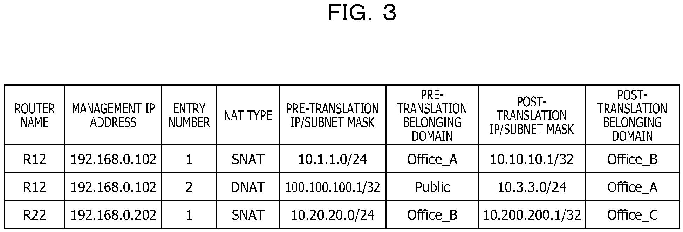

The NAT table database 13 stores the NAT setting information for a plurality of NAT tables. FIG. 3 is a view illustrating an example of the NAT table database 13. As illustrated in FIG. 3, the NAT table database 13 stores a router name, a management IP address, an entry number, a NAT type, a pre-translation IP/subnet mask, a post-translation IP/subnet mask, and a post-translation belonging domain in association with each other.

The router name is a name for identifying a network device 2 that has transmitted the NAT setting information. The management IP address is an IP address of the network device 2 identified by the router name. The entry number is a number for identifying an entry for the network device 2 identified by the router name. The NAT type indicates whether NAT is a SNAT or a DNAT.

The pre-translation IP/subnet mask is an IP address and a subnet mask before NAT translation. The pre-translation belonging domain is a name for identifying a domain to which the pre-translation IP/subnet mask belongs. The post-translated IP/subnet mask is an IP address and subnet mask after NAT translation. The post-translation belonging domain is a name for identifying a domain to which the post-translation IP/subnet mask belongs. The term "public" indicates a domain of a public network such as the Internet.

For example, the IP address of a network device 2 identified by "R12" is "192.168.0.102", and the corresponding entry number in the network device 2 identified by "R12" is "1". SNAT is performed in the network device 2 identified by "R12". The IP address and the subnet mask before the NAT translation are "10.1.1.0/24". The name for identifying a domain to which "10.1.1.0/24" belongs is "Office_A". The IP address and the subnet mask after the NAT translation are "10.10.10.1/32". The name for identifying a domain to which "10.10.10.1/32" belongs is "Office_B".

Upon receiving a consistency check request from the user communication unit 18, the FIB search unit 14 creates end network information based on the FIB table information. Here, the FIB table information is information stored in the FIB table database 12. Further, the end network information is a list of IP addresses and subnet masks of each network separated by the network device 2. The FIB search unit 14 passes the created end network information to the extended route controller 15.

The extended route controller 15 creates an extended IP address information table based on the end network information acquired from the FIB search unit 14 and NAT table information. Here, the NAT table information is information stored in the NAT table database 13. Then, the extended route controller 15 passes the extended IP address information registered in the extended IP address information table to the forwarding graph generation unit 16.

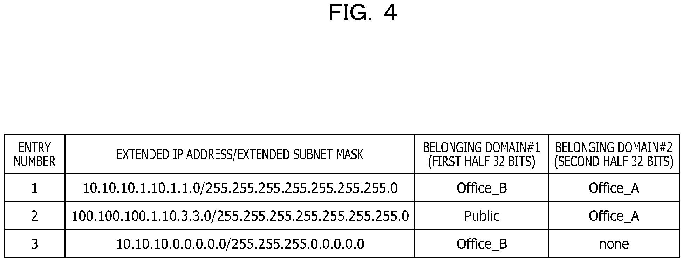

FIG. 4 is a view illustrating an example of the extended IP address information table. As illustrated in FIG. 4, the extended IP address information table is a table in which an entry number, an extended IP address/extended subnet mask, a belonging domain #1, and a belonging domain #2 are associated with each other for each extended IP address/extended subnet mask.

The entry number is a number for identifying each entry. The extended IP address/extended subnet mask is created from the IP address/subnet masks of two networks connected by the network device 2 based on whether communication is performed via the NAT.

The belonging domain #1 is a domain of the main network. A belonging domain #2 is a domain of the sub-network. Here, the main network is a network in which a communication message is transferred without a NAT, and the sub-network is a network to which a communication message does not enter or from which a communication message does not exit without a NAT. The term "none" indicates that there is no domain.

For example, the extended IP address/extended subnet mask of an entry whose entry number is "1" is "10.10.10.1.10.1.1.0/255.255.255.255.255.255.255.0". The domain of the main network of the entry whose entry number is "1" is "Office_B", and the domain of the sub-network is "Office_A".

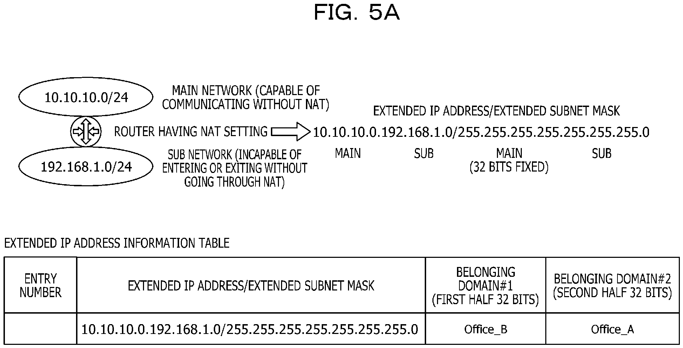

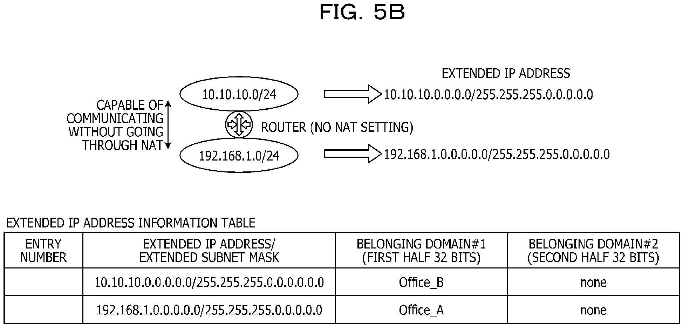

FIGs. 5A and 5B are views for explaining a method of creating an extended IP address/extended subnet mask. FIG. 5A illustrates a case where a main network and a sub-network are connected by a router having NAT setting. FIG. 5B illustrates a case where two main networks are connected by a router without NAT setting.

As illustrated in FIG. 5A, when the main network and the sub-network are connected by a router having NAT setting, the upper level of the extended IP address is the IP address of the main network, and the lower level of the extended IP address is the IP address of the sub-network. The upper level of the extended subnet mask is fixed to "255.255.255.255", and the lower level of the extended subnet mask is the subnet mask of the sub-network.

For example, it is assumed that the IP address/subnet mask of the main network is "10.10.10.0/24" and the IP address/subnet mask of the sub-network is "192.168.1.0/24". Then, the extended IP address/extended subnet mask is "10.10.10.0.192.168.1.0/255.255.255.255.255.255.255.0".

As illustrated in FIG. 5B, when two main networks are connected by a router without NAT setting, an extended IP address/extended subnet mask is created from each IP address/subnet mask. The upper level of the extended IP address is the IP address of each main network, and the lower level of the extended IP address is fixed to "0.0.0.0". Further, the upper level of the extended subnet mask is a subnet mask of each main network, and the lower level of the extended subnet mask is fixed to "0.0.0.0".

For example, it is assumed that the IP addresses/subnet masks of two networks are "10.10.10.0/24" and "192.168.1.0/24". Then, the extended IP address/extended subnet masks are "10.10.10.0.0.0.0.0/255.255.255.0.0.0.0" and "192.168.1.0.0.0.0.0/255.255.2555.0.0.0.0.0".

Referring back to FIG. 1, the forwarding graph generation unit 16 generates a forwarding graph based on the extended IP address information and passes the forwarding graph represented by the adjacency matrix to the consistency check unit 17.

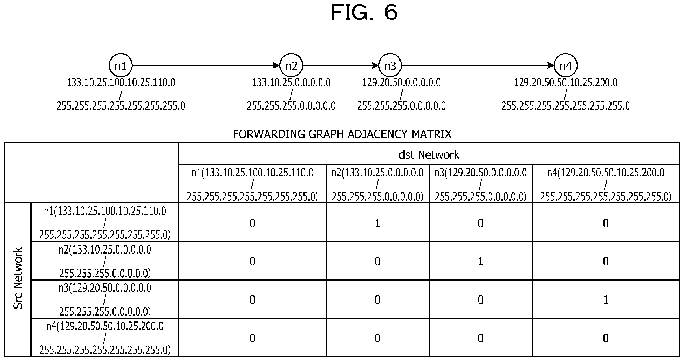

FIG. 6 is a view for explaining an adjacency matrix display of a forwarding graph. As illustrated in FIG. 6, the forwarding graph is a directed graph in which networks are nodes and routing settings between networks are arrows. An extended IP address/extended subnet is associated with the network.

In FIG. 6, "n1", "n2", "n3", and "n4" are networks. "133.10.25.100.10.25.110.0/255.255.255.255.255.255.255.0" is associated with "n1". "133.10.25.0.0.0.0.0/255.255.255.0.0.0.0.0" is associated with "n2". "129.20.50.0.0.0.0.0/255.255.255.0.0.0.0.0" is associated with "n3". "129.20.50.50.10.25.200.0/255.255.255.255.255.255.255.0" is associated with "n4".

The adjacency matrix is a matrix in which a network included in the forwarding graph has a row (src Network) and a column (dst Network). When there is a routing setting from a network in the row to a network in the column, the element of the adjacency matrix is "1"; otherwise, the element of the adjacency matrix is "0".

In FIG. 6, since there is a routing setting from "n1" to "n2", "n2" to "n3", and "n3" to "n4", assuming that the adjacency matrix is set to A and the element at the i-th row and the j-th column of A is set to aij, a12, a23, and a34 are "1 and the other elements are "0".

The consistency check unit 17 checks whether all the networks may be reached end-to-end with respect to the forwarding graph expressed by the adjacency matrix, and passes the check result to the user communication unit 18.

The user communication unit 18 receives a consistency check request from a user and passes the consistency check request to the FIB search unit 14. When receiving the check result from the consistency check unit 17, the user communication unit 18 displays the check result to the user using a display device.

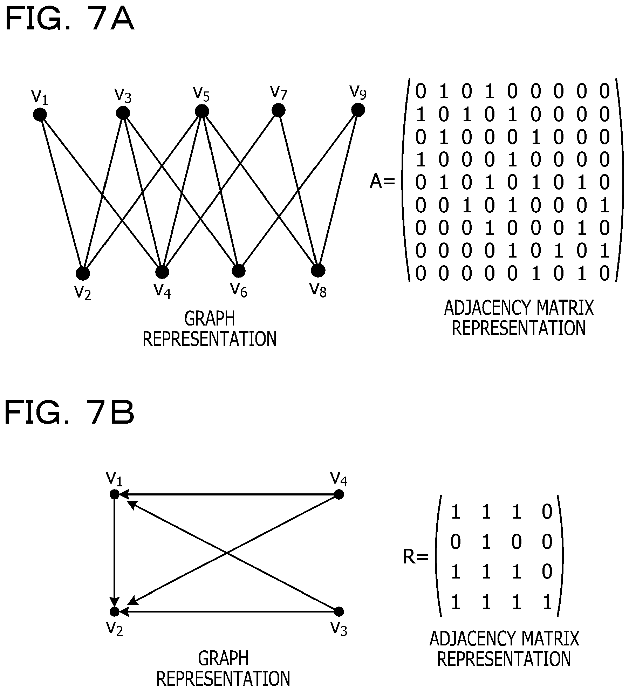

FIGs. 7A and 7B are views for explaining a method of determining reachability, which is performed by the consistency check unit 17. In the graph illustrated in FIGs. 7A and 7B, vi to vg indicate nodes, lines without arrows indicate bidirectional paths, and lines with arrows indicate paths in the arrow direction.

As illustrated in FIG. 7A, a graph may be generally expressed as an adjacency matrix A. The consistency check unit 17 determines reachability by calculating a reachability matrix R from the adjacency matrix A. FIG. 7B illustrates an example of the reachability matrix R. Assuming that the element at the i-th row and the j-th column of the reachability matrix R is rij, rij is "1" when the node i may reach the node j, and rij is "0" when the node i may not reach the node j. However, rii is "1".

The consistency check unit 17 adds the unit matrix I to the adjacency matrix A and repeats r multiplications until (A+I)^{r-1}≠(A+I)^{r}=(A+I)^{r+1}. At this time, when (A+I)^{r}=(A+I)^{r+1}=T, T is a reachability matrix.

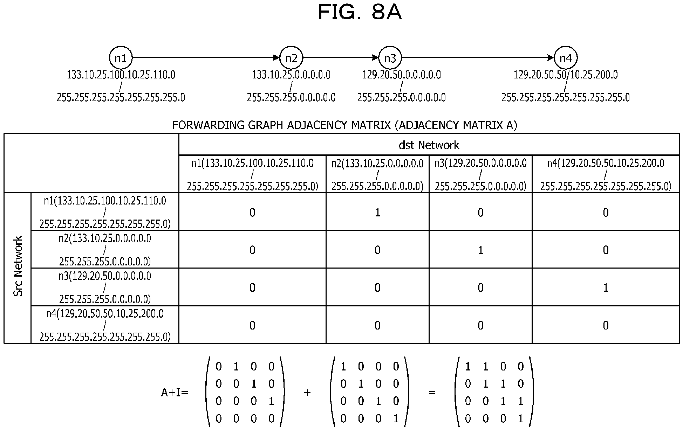

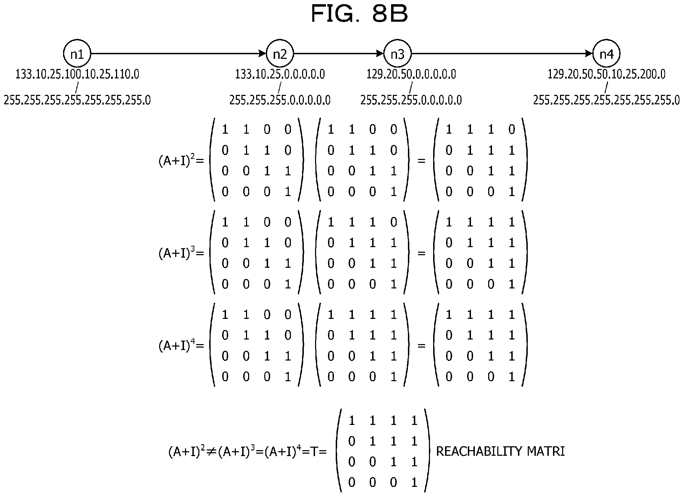

FIGs. 8A to 8C are views illustrating examples of reachability determination. FIG. 8A illustrates A+I calculated from the adjacency matrix illustrated in FIG. 6. FIG. 8B illustrates (A+I)², (A+I)³, and (A+I)⁴. As illustrated in FIG. 8B, (A+I)²≠(A+I)³=(A+I)⁴=T, and the reachability matrix is calculated when r=3.

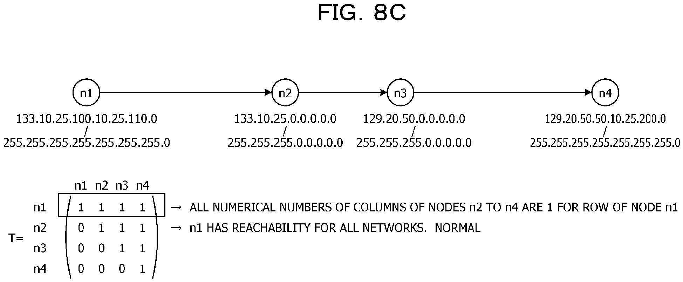

The consistency check unit 17 determines reachability from a network "n1" to networks "n2" to "n4" using the reachability matrix. That is, as illustrated in FIG. 8C, the consistency check unit 17 determines the reachability with respect to "n2" to "n4" based on whether the "n2" to "n4" columns of the "n1" row of the reachability matrix are "1". In FIG. 8C, since all the "n2" to "n4" columns of the "n1" row of the reachability matrix are "1", the consistency check unit 17 determines that the network "n1" may reach all the networks and there is consistency.

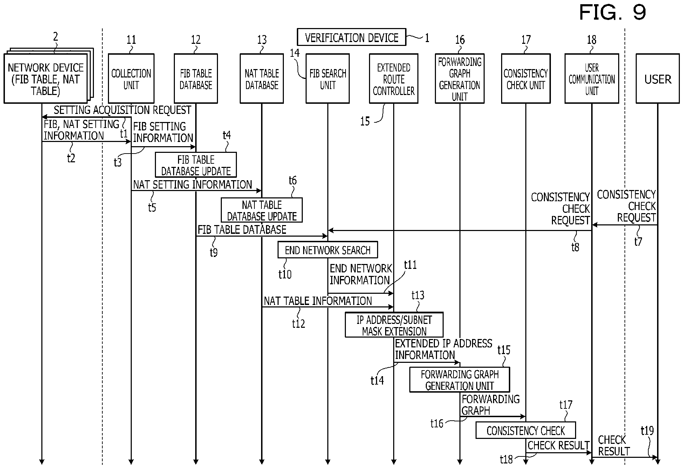

Next, the sequence of the consistency determination will be described. FIG. 9 is a view illustrating the sequence of the consistency determination. As illustrated in FIG. 9, the collection unit 11 transmits a setting acquisition request to each network device 2 (t1). Then, each network device 2 transmits the FIB setting information and the NAT setting information to the collection unit 11 (t2).

The collection unit 11 stores the FIB setting information in the FIB table database 12 (t3), and the FIB table database 12 is updated (t4). Further, the collection unit 11 stores the NAT setting information in the NAT table database 13 (t5), and the NAT table database 13 is updated (t6).

Then, the user communication unit 18 receives a consistency check request from a user (t7), and passes the received consistency check request to the FIB search unit 14 (t8). Upon receiving the consistency check request, the FIB search unit 14 acquires the FIB table information (t9), and performs an end network search (t10). Then, the FIB search unit 14 passes end network information to the extended route controller 15 (t11).

Upon receiving the end network information, the extended route controller 15 acquires the NAT table information (t12), and performs an IP address/subnet mask extension (t13). Then, the extended route controller 15 passes the extended IP address information to the forwarding graph generation unit 16 (t14).

Upon receiving the extended IP address information, the forwarding graph generation unit 16 generates a forwarding graph (t15), and passes the forwarding graph expressed by the adjacency matrix to the consistency check unit 17 (t16).

Upon receiving the forwarding graph, the consistency check unit 17 performs a consistency check (t17), and passes the check result to the user communication unit 18 (t18). Upon receiving the check result, the user communication unit 18 displays the check result to a user (t19).

In this way, the verification device 1 creates the extended IP address information using the end network information and the NAT table information, and generates the forwarding graph using the extended IP address information. Then, the verification device 1 checks the consistency by using the forwarding graph. Therefore, the verification device 1 may easily verify the consistency of the network in which the IP address translation by the NAT function is performed.

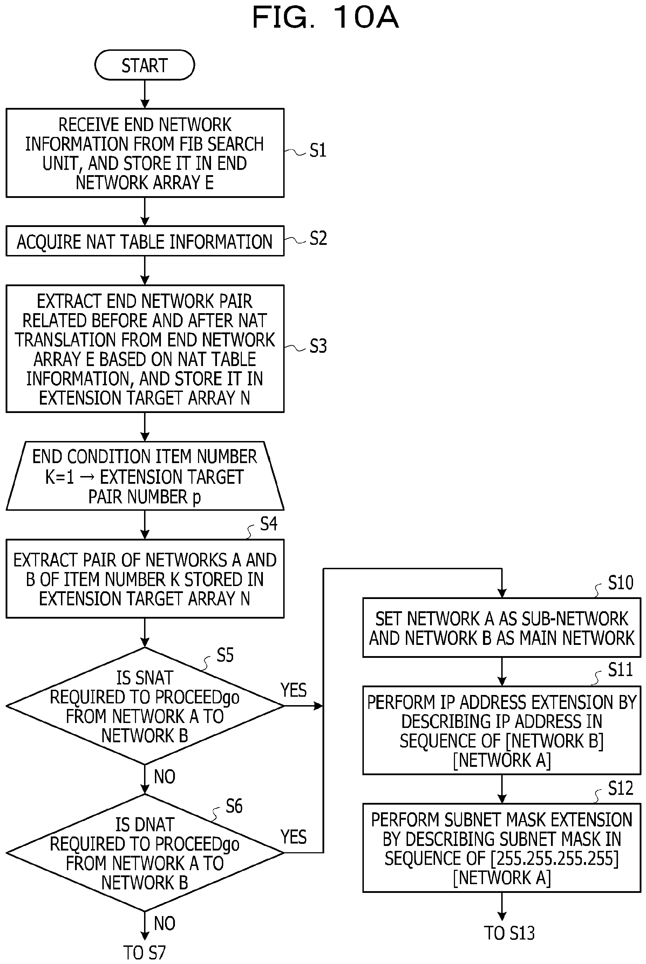

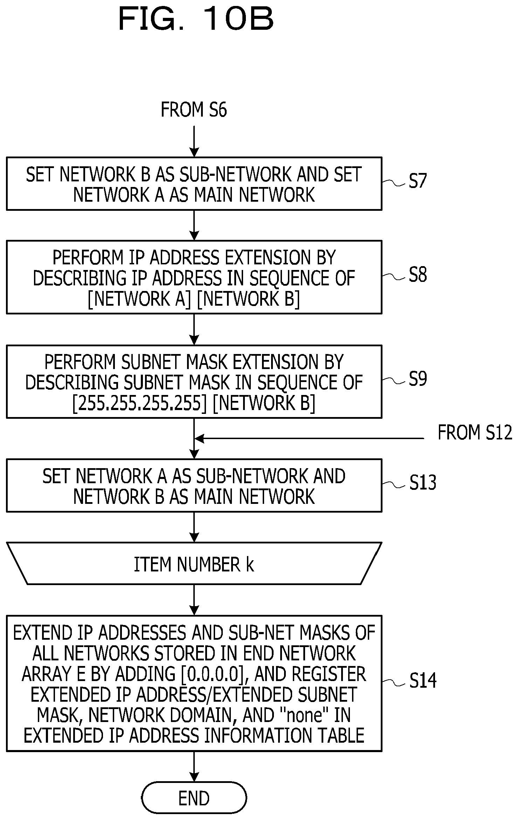

Next, a flow of a process of creating the extended IP address information will be described. FIGs. 10A and 10B are flowcharts illustrating a flow of a process of creating the extended IP address information. As illustrated in FIGs. 10A and 10B, the extended route controller 15 receives the end network information from the FIB search unit 14, and stores such information in an end network array E (step S1).

Then, the extended route controller 15 acquires the NAT table information (step S2), extracts an end network pair related before and after the NAT translation from the end network array E based on the NAT table information, and stores the extracted end network pair in an extension target array N (step S3). The expansion target array N is a two-dimensional array in which the number p of end network pairs is the number of rows, and the number of columns is two.

Then, the extended route controller 15 repeats the following steps S4 to S13 from item number k=1 to item number p. The extended route controller 15 extracts the pair of the network A and the network B of the item number k stored in the extension target array N (step S4), and determines whether the SNAT is required to proceed from the network A to the network B (step S5). When it is determined that the SNAT is not required to proceed from the network A to the network B, the extended route controller 15 determines whether the DNAT is required to proceed from the network A to the network B (step S6).

When it is determined that the DNAT is not required to proceed from the network A to the network B, the extended route controller 15 sets the network B as a sub-network and sets the network A as a main network (step S7). Then, the extended route controller 15 performs the IP address extension by describing the IP address in the sequence of [network A] [network B] (step S8). Then, the extended route controller 15 performs the subnet mask extension by describing the subnet mask in the sequence of [255.255.255.255] [network B] (step S9). Then, the extended route controller 15 proceeds to step S13.

In the meantime, when it is determined that the DNAT or the SNAT is required to proceed from the network A to the network B, the extended route controller 15 sets the network A as a sub-network and the network B as a main network (step S10). Then, the extended route controller15 performs the IP address extension by describing the IP address in the sequence of [network B] [network A] (step S11). Then, the extended route controller15 performs the subnet mask extension by describing the subnet mask in the sequence of [255.255.255.255] [network A] (step S12).

Then, the extended route controller 15 registers the extended IP address/extended subnet mask, the domain of the main network, and the domain of the sub-network in the extended IP address information table (step S13).

Then, the extended route controller 15 extends all IP addresses and sub-net masks stored in the end network array by appending [0.0.0.0] thereto, and registers the extended IP addresses and sub-net masks in the extended IP address information table (step S14). The extended IP address/extended subnet mask, the network domain, and "none" are registered in the extended IP address information table.

Since the extended route controller 15 creates the extended IP address information table in this way, the forwarding graph generation unit 16 may generate one forwarding graph even when there is a NAT.

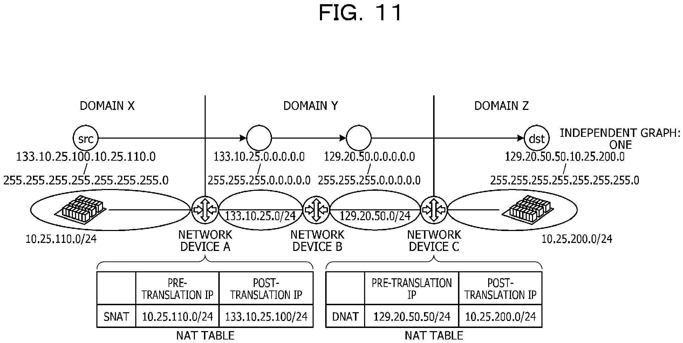

FIG. 11 is a view illustrating an example of a forwarding graph generated by the verification device 1. The verification device 1 extends the IP address/subnet mask using the FIB setting information and the NAT setting information of each network device 2 before generating the forwarding graph, thereby displaying one type of forwarding graph indicating the connectivity between different domains. Therefore, since the verification device 1 only needs to perform the consistency verification for one type of forwarding graph, the consistency verification may be performed in 1/7 of the process as compared with the seven types of forwarding graphs illustrated in FIG. 17.

As described above, in the first embodiment, the FIB search unit 14 performs the end network search based on the FIB table information, and passes the end network information to the extended route controller 15. Then, the extended route controller 15 creates the extended IP address information based on the end network information and the NAT table information, and passes the created IP address information to the forwarding graph generation unit 16. Then, the forwarding graph generator 16 generates the forwarding graph based on the extended IP address information, and passes the forwarding graph represented by the adjacency matrix to the consistency check unit 17. Then, the consistency check unit 17 performs the consistency check, and passes the check result to the user communication unit 18. The user communication unit 18 displays the check result to the user. Therefore, the verification device 1 may easily perform the consistency verification of the network in which the IP address translation is performed by the NAT function.

In the first embodiment, descriptions have been made on the case where the FIB setting information is used, but the verification device 1 may use other route setting information.

### [Second Embodiment]

In the first embodiment, descriptions have been made on the case where one verification device 1 collects the FIB setting information and the NAT setting information from all network devices 2, but the verification device may be installed for each domain and the collection of the FIB setting information and the NAT setting information may be performed for each domain. In a second embodiment, a case will be described in which the FIB setting information and the NAT setting information are collected for each domain.

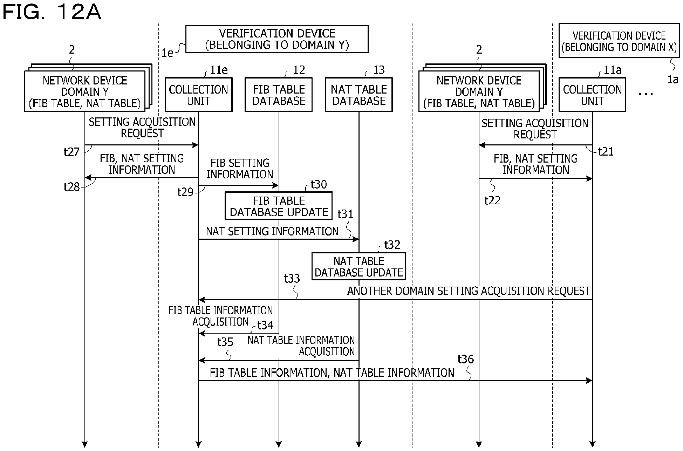

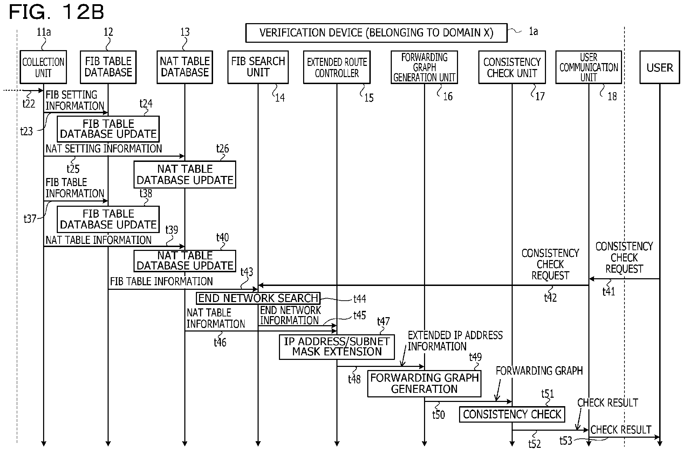

FIGs. 12A and 12B are views illustrating the sequence of a consistency determination according to a second embodiment. In FIGs. 12A and 12B, functional units that perform the same functions as the units illustrated in FIG. 9 are denoted by the same reference numerals. As illustrated in FIGs. 12A and 12B, a verification device 1a is installed in a domain X, and a verification device 1e is installed in a domain Y. The verification device 1e is also installed in another domain.

A collection unit 11a of the verification device 1a transmits a setting acquisition request to each network device 2 in the domain X (t21). Then, each network device 2 transmits FIB setting information and NAT setting information to the collection unit 11a (t22).

The collection unit 11a stores the FIB setting information in the FIB table database 12 (t23), and the FIB table database 12 is updated (t24). Further, the collection unit 11a stores the NAT setting information in the NAT table database 13 (t25), and the NAT table database 13 is updated (t26).

A collection unit 11e of the verification device 1e transmits a setting acquisition request to each network device 2 in the domain Y (t27). Then, each network device 2 transmits the FIB setting information and the NAT setting information to the collection unit 11e (t28).

The collection unit 11e stores the FIB setting information in the FIB table database 12 (t29), and the FIB table database 12 is updated (t30). Further, the collection unit 11e stores the NAT setting information in the NAT table database 13 (t31), and the NAT table database 13 is updated (t32).

Then, when the collection unit 11a transmits a setting acquisition request of another domain to the collection unit 11e (t33), the collection unit 11e acquires the FIB table information from the FIB table database 12 (t34). Then, the collection unit 11e acquires the NAT table information from the NAT table database 13 (t35). Then, the collection unit 11e transmits the FIB table information and the NAT table information to the collection unit 11a (t36).

Then, the collection unit 11a stores the FIB table information in the FIB table database 12 (t37), and the FIB table database 12 is updated (t38). Further, the collection unit 11a stores the NAT table information in the NAT table database 13 (t39), and the NAT table database 13 is updated (t40).

Then, the user communication unit 18 receives a consistency check request from the user (t41), and passes the received consistency check request to the FIB search unit 14 (t42). Upon receiving the consistency check request, the FIB search unit 14 acquires the FIB table information (t43), and performs an end network search (t44). Then, the FIB search unit 14 passes end network information to the extended route controller 15 (t45).

Upon receiving the end network information, the extended route controller15 acquires the NAT table information (t46), and performs an IP address/subnet mask extension (t47). Then, the extended route controller15 passes extended IP address information to the forwarding graph generation unit 16 (t48).

Upon receiving the extended IP address information, the forwarding graph generation unit 16 generates a forwarding graph (t49), and passes the forwarding graph expressed by the adjacency matrix to the consistency check unit 17 (t50).

Upon receiving the forwarding graph, the consistency check unit 17 performs a consistency check (t51), and passes the check result to the user communication unit 18 (t52). Upon receiving the check result, the user communication unit 18 displays the check result to the user (t53).

As described above, in the second embodiment, the verification device 1e collects the FIB setting information and the NAT setting information from the network devices 2 in the domain, and transmits the collected FIB setting information and NAT setting information to the verification device 1a. Therefore, the verification device 1a may efficiently collect the FIB setting information and the NAT setting information.

### [Third Embodiment]

In the first and second embodiments, descriptions have been made on the case where the verification devices 1 and 1a create the extended IP address information. However, certain network devices may have a function of creating the extended IP address information. In a third embodiment, a case will be described in which there are a network device having a function of creating the extended IP address information and a network device not having a function of creating the extended IP address information.

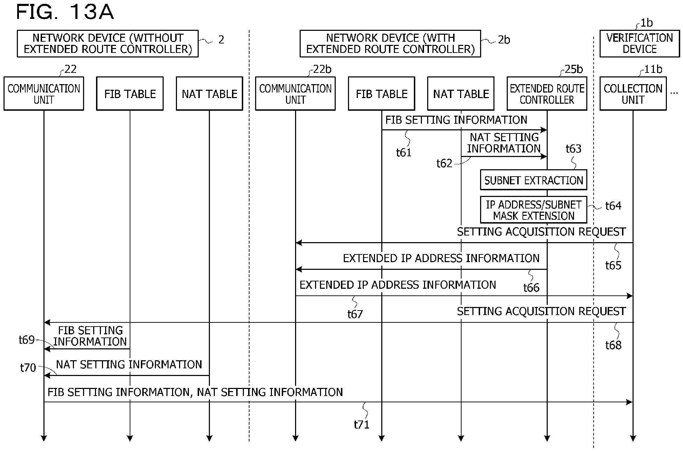

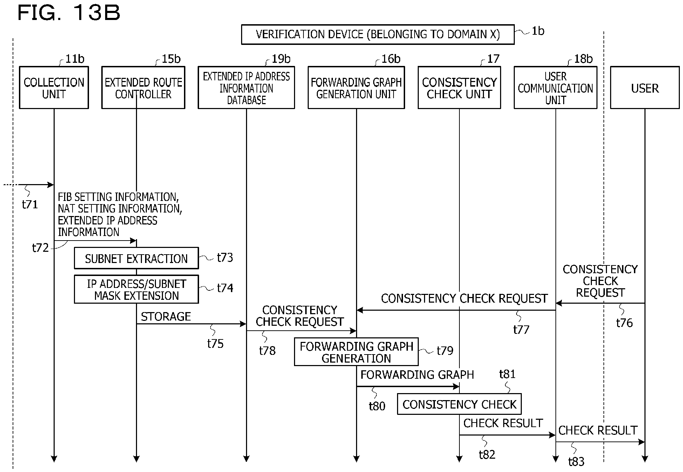

FIGs. 13A and 13B are views illustrating the sequence of a consistency determination according to a third embodiment. In FIGs. 13A and 13B, functional units that perform the same functions as the units illustrated in FIG. 9 are denoted by the same reference numerals. As illustrated in FIGs. 13A and 13B, an extended route controller 25b of a network device 2b that has a function of creating the extended IP address information acquires the FIB setting information of its own device (t61), and acquires the NAT setting information of its own device (t62).

Then, the extended route controller 25b extracts a subnet using the acquired FIB setting information and NAT setting information (t63), and performs an IP address/subnet mask extension (t64). When a communication unit 22b of the network device 2b receives a setting acquisition request from the collection unit 11b of the verification device 1b (t65), the communication unit 22b acquires the extended IP address information from the extended route controller 25b (t66), and transmits the acquired extended IP address information to the collection unit 11b (t67).

In addition, the collection unit 11b transmits a setting acquisition request to the network device 2 having no function of creating the extended IP address information (t68). Then, the communication unit 22 of the network device 2 acquires the FIB setting information (t69), and acquires the NAT setting information (t70). Then, the communication unit 22 transmits the FIB setting information and the NAT setting information to the collection unit 11b (t71).

The collection unit 11b passes the FIB setting information and the NAT setting information received from the communication unit 22 and the extended IP address information received from the communication unit 22b to an extended route controller 15b (t72). The extended route controller 15b extracts a subnet using the FIB setting information and the NAT setting information received from the collection unit 11b (t73), and performs an IP address/subnet mask extension (t74). Then, the extended route controller 15b stores the created extended IP address information in an extended IP address information database 19b, together with the extended IP address information received from the collection unit 11b (t75).

Then, a user communication unit 18b receives a consistency check request from the user (t76), and passes the received consistency check request to a forwarding graph generation unit 16b (t77). Upon receiving the consistency check request, the forwarding graph generation unit 16b acquires the extended IP address information from the extended IP address information database 19b (t78), and generates a forwarding graph (t79). Then, the forwarding graph generation unit 16b passes the forwarding graph expressed by the adjacency matrix to the consistency check unit 17 (t80).

Upon receiving the forwarding graph, the consistency check unit 17 performs a consistency check (t81), and passes the check result to the user communication unit 18b (t82). Upon receiving the check result, the user communication unit 18b displays the check result to the user (t83).

As described above, in the third embodiment, the verification device 1b acquires the FIB setting information and the NAT setting information from the network device 2, creates the extended IP address information, and receives the extended IP address information from the network device 2b. Therefore, the verification device 1b may perform the consistency check even when certain network devices have a function of creating the extended IP address information.

### [Fourth Embodiment]

In the above third embodiment, descriptions have been made on the case where the verification device 1b and certain network devices 2b create the extended IP address information, but the function of creating the extended IP address information may be transferred from the verification device to the network device. In a fourth embodiment, a case will be described in which the function of creating the extended IP address information is transferred from a verification device to a network device.

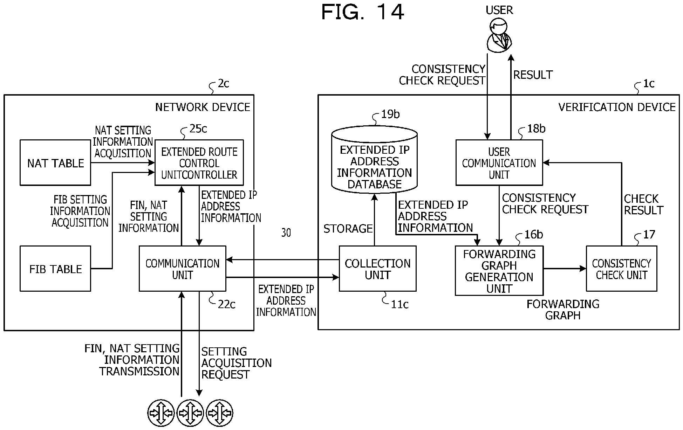

FIG. 14 is a view illustrating the functional configuration of a network device 2c and a verification device 1c according to a fourth embodiment. Here, for convenience of explanation, functional units that perform the same functions as the respective units illustrated in FIG. 1 are denoted by the same reference numerals, and the detailed explanation thereof will be omitted.

As illustrated in FIG. 14, the network device 2c according to a fourth embodiment includes an extended route controller 25c and a communication unit 22c. The verification device 1c according to the fourth embodiment includes a collection unit 11c, an extended IP address information database 19b, a forwarding graph generation unit 16b, a consistency check unit 17, and a user communication unit 18b.

Upon receiving the FIB setting information and the NAT setting information of another network device 2 from the communication unit 22c, the extended route controller 25c acquires the FIB setting information and the NAT setting information of the own device, and creates the extended IP address information. That is, the extended route controller 25c creates end network information based on the FIB setting information of another network device 2 and the FIB setting information of its own device. Then, the extended route controller 25c creates the extended IP address information based on the NAT setting information of another network device 2, the NAT setting information of its own device, and the end network information. When requested by the communication unit 22c for the extended IP address information, the extended route controller 25c passes the extended IP address information to the communication unit 22c.

The communication unit 22c acquires the FIB setting information and the NAT setting information from another network device 2, and passes such information to the extended route controller 25c. Further, upon receiving a setting acquisition request from the verification device 1c, the communication unit 22c receives the extended IP address information from the extended route controller 25c, and transmits such information to the verification device 1c.

The collection unit 11c transmits the setting acquisition request to the network device 2c, and acquires the extended IP address information. Then, the collection unit 11c stores the acquired extended IP address information in the extended IP address information database 19b.

Upon receiving a consistency check request from the user communication unit 18b, the forwarding graph generation unit 16b acquires the extended IP address information from the extended IP address information database 19b. Then, the forwarding graph generation unit 16b generates a forwarding graph based on the acquired extended IP address information, and passes the forwarding graph expressed by the adjacency matrix to the consistency check unit 17.

The user communication unit 18b receives a consistency check request from the user, and passes the consistency check request to the forwarding graph generation unit 16b. Upon receiving the check result from the consistency check unit 17, the user communication unit 18b displays the check result to the user using a display device.

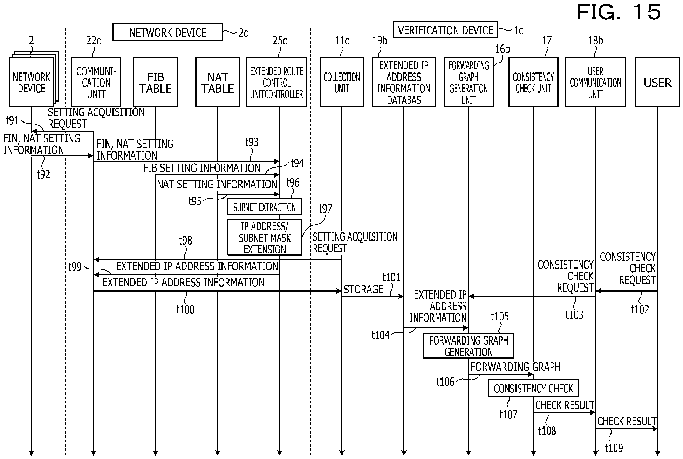

FIG. 15 is a view illustrating the sequence of a consistency determination according to the fourth embodiment. As illustrated in FIG. 15, the communication unit 22c of the network device 2c transmits a setting acquisition request to the network device 2 (t91), and acquires the FIB setting information and the NAT setting information (t92). Then, the communication unit 22c passes the acquired FIB setting information and NAT setting information to the extended route controller 25c (t93).

The extended route controller 25c acquires the FIB setting information of its own device (t94), and acquires the NAT setting information of its own device (t95). Then, the extended route controller 25c extracts a subnet using the FIB setting information and NAT setting information received from the communication unit 22c and the FIB setting information and NAT setting information acquired from its own device (t96), and performs an IP address/subnet mask extension (t97).

Then, upon receiving the setting acquisition request from the collection unit 11c (t98), the communication unit 22c acquires the extended IP address information from the extended route controller 25c (t99), and transmits the acquired extended IP address information to the collection unit 11c (t100). Upon receiving the extended IP address information, the collection unit 11c stores the extended IP address information in the extended IP address information database 19b (t101).

Then, the user communication unit 18b receives a consistency check request from the user (t102), and passes the received consistency check request to the forwarding graph generation unit 16b (t103). Upon receiving the consistency check request, the forwarding graph generation unit 16b acquires the extended IP address information from the extended IP address information database 19b (t104), and generates a forwarding graph (t105). Then, the forwarding graph generation unit 16b passes the forwarding graph expressed by the adjacency matrix to the consistency check unit 17 (t106).

Upon receiving the forwarding graph, the consistency check unit 17 performs a consistency check (t107), and passes the check result to the user communication unit 18b (t108). Upon receiving the check result, the user communication unit 18b displays the check result to the user (t109).

As described above, in the fourth embodiment, since the network device 2c creates the extended IP address information and the verification device 1c acquires the extended IP address information from the network device 2c and performs the consistency check, the consistency check may be performed with efficiency.

In the first to fourth embodiments, the verification devices 1 to 1c have been described. However, a verification program having the same function may be obtained by implementing the configurations of the verification devices to 1c by software. Therefore, a computer (information processing apparatus) that executes the verification program will be described. Further, the functions of the network device 2b and the network device 2c are also implemented by executing a program having the same function by a computer.

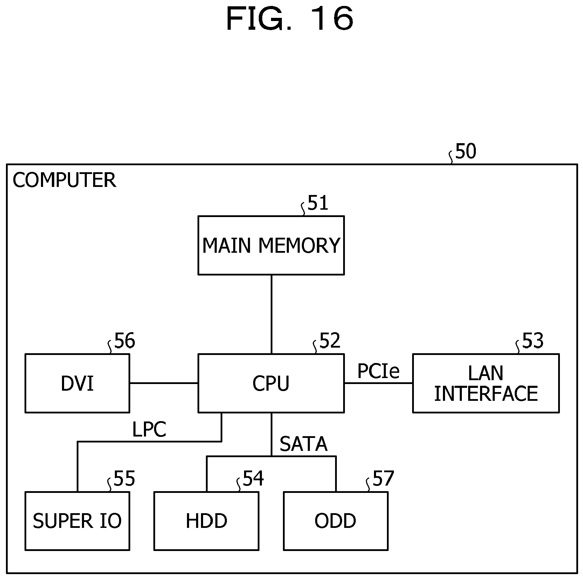

FIG. 16 is a view illustrating the hardware configuration of a computer that executes a verification program according to an embodiment. As illustrated in FIG. 16, the computer 50 includes a main memory 51, a CPU (Central Processing Unit) 52, a LAN (Local Area Network) interface 53, and an HDD (Hard Disk Drive) 54. Further, the computer 50 includes a super IO (Input/Output) 55, a DVI (Digital Visual Interface) 56, and an ODD (Optical Disk Drive) 57.

The main memory 51 is a memory that stores a program, a result during execution of the program, and the like. The CPU 52 is a central processing unit that reads and executes a program from the main memory 51. The CPU 52 includes a chip set having a memory controller.

The LAN interface 53 is an interface that connects the computer 50 to another computer via a LAN. The HDD 54 is a disk device that stores programs and data, and the super IO 55 is an interface that connects an input device such as, for example, a mouse and a keyboard. The DVI 56 is an interface that connects a liquid crystal display device, and the ODD 57 is a device that reads and writes a DVD.

The LAN interface 53 is connected to the CPU 52 by a PCI Express (PCIe), and the HDD 54 and the ODD 57 are connected to the CPU 52 by a SATA (Serial Advanced Technology Attachment). The super IO 55 is connected to the CPU 52 by an LPC (Low Pin Count).

The verification program executed by the computer 50 is stored in a DVD, which is an example of a recording medium readable by the computer 50, is read from the DVD by the ODD 57, and is installed in the computer 50. Alternatively, the verification program is stored in a database or the like of another computer system connected via the LAN interface 53, is read from the database, and is installed in the computer 50. Then, the installed verification program is stored in the HDD 54, is read out to the main memory 51, and is executed by the CPU 52.

## Claims

1. A verification program that causes a computer to execute a process comprising:
when performing a network address translation, creating a forwarding graph that represents a network connection from a source network to a destination network based on extended IP address information in which an extended IP address including IP addresses before and after the network address translation, a belonging domain before the network address translation, and a belonging domain after the network address translation are associated with each other; and
verifying reachability from the source network to the destination network based on the created forwarding graph.

2. The verification program according to claim 1, the process further comprising:
acquiring route setting information and network address translation setting information from a network device;
creating end network information which is a list of IP addresses of respective networks based on the acquired route setting information;
creating first extended IP address information based on the created end network information and the acquired network address translation setting information; and
creating the forwarding graph based on the created first extended IP address information.

3. The verification program according to claim 2, the process further comprising:
acquiring the route setting information and the network address translation setting information from network devices that belong to respective domains.

4. The verification program according to claim 2, wherein
the computer belongs to a first domain among a plurality of domains, and
the process further comprises:
acquiring, from network devices that belong to respective domains other than the first domain, the route setting information and the network address translation setting information collected for the respective domains.

5. The verification program according to claim 2, the process comprising:
acquiring second extended IP address information from a network device having a function of creating extended IP address information; and
creating the forwarding graph based on the acquired second extended IP address information and the created first extended IP address information.

6. The verification program according to claim 1, the process further comprising:
acquiring the extended IP address information from a network device having a function of creating the extended IP address information; and
creating the forwarding graph based on the acquired extended IP address information.

7. The verification program according to any one of claims 2 to 5, the process further comprising:
creating the extended IP address by appending an IP address of a sub network to an IP address of a main network, the main network being a network in which a communication message is transferred without the network address translation, the sub network being a network to which a communication message does not enter or from which a communication message does not exit without the network address translation.

8. The verification program according to any one of claims 2 to 5, the process further comprising:
creating the extended IP address by appending a predetermined address to an IP address when the network address translation is not performed.

9. A verification method, comprising:
when performing a network address translation, creating by a computer a forwarding graph that represents a network connection from a source network to a destination network based on extended IP address information in which an extended IP address including IP addresses before and after the network address translation, a belonging domain before the network address translation, and a belonging domain after the network address translation are associated with each other; and
verifying reachability from the source network to the destination network based on the created forwarding graph.

10. A verification device, comprising:
a forwarding graph generation unit that creates, when performing a network address translation, a forwarding graph that represents a network connection from a source network to a destination network based on extended IP address information in which an extended IP address including IP addresses before and after the network address translation, a belonging domain before the network address translation, and a belonging domain after the network address translation are associated with each other; and
a consistency check unit that verifies reachability from the source network to the destination network based on the created forwarding graph.
